# EUROPÄISCHE PATENTSCHRIFT

(11) **EP 0 733 790 B1**
(45) Veröffentlichungstag und Bekanntmachung des Hinweises auf die Patenterteilung: **19.04.2000**
(21) Anmeldenummer: 95116252.8
(22) Anmeldetag: 16.10.1995
(51) Int. Cl.: F02B 27/02

(54) **Verstelleinrichtung**
Adjusting device
Dispositif de réglage

(30) Priorität: 23.03.1995 DE 19510528
(43) Veröffentlichungstag der Anmeldung: 25.09.1996
(73) Patentinhaber: ROBERT BOSCH GMBH, 70442 Stuttgart (DE); MAHLE Filtersysteme GmbH, 70376 Stuttgart (DE)
(72) Erfinder: Brenner, Kurt, Dipl.-Ing. (FH), D-71336 Waiblingen (DE); Hezel, Bruno, D-70565 Stuttgart (DE); Brodesser, Kay, D-71277 Rutesheim (DE); Drespling, Hans-Peter, D-89522 Heidenheim (DE); Pscheidt, Berthold, D-73765 Neuhausen (DE)

(56) Entgegenhaltungen:
- EP-A- 0 432 919
- EP-A- 0 569 714
- DE-A- 4 307 312
- GB-A- 2 251 887
- US-A- 4 738 229
- US-A- 4 794 885

## Beschreibung

### Stand der Technik

Die Erfindung geht aus von einer Verstelleinrichtung für eine Brennkraftmaschine.

Die Leistung einer Brennkraftmaschine ist proportional dem Luftdurchsatz. Da dieser proportional der Luftdichte ist, kann die Leistung einer bezüglich Hubvolumen und Drehzahl vorgegebenen Brennkraftmaschine durch Vorverdichten der Luft vor Eintritt in den Zylinder, d. h. durch Aufladen, erhöht werden. Eine einfache Art der Aufladung besteht in der Ausnutzung der Dynamik der angesaugten Luft. Dies kann beispielsweise mit einer sogenannten Schwingsaugrohr-Aufladung geschehen.

Es gibt Brennkraftmaschinen, die mit einer Schwingsaugrohr-Aufladung ausgestattet sind. Unter Schwingsaugrohr-Aufladung versteht man das Nachladen des Zylinders gegen Ende des Ansaugvorgangs durch Ausnutzung der Gasdynamik im Saugrohr. Das Saugrohr kann hierbei auch als Schwingrohr bezeichnet werden.

Da die physikalische Idealvorstellung eines stufenlos längenveränderbaren Saugrohres von der ökonomischen als auch technischen Machbarkeit nicht zu vertreten ist, werden diese Konstruktionen üblicherweise mit zwei Schaltpunkten, d. h. mit zwei Resonanzpunkten, respektive für zwei Drehzahlzustände der Brennkraftmaschine, ausgeführt. Das Umschalten zwischen den zwei Saugrohrlängen geschieht mit Hilfe eines verstellbaren Schließkörpers. Der Schließkörper kann auch als Resonanzschaltklappe bezeichnet werden.

Die Verstellung des Schließkörpers kann beispielsweise mit Hilfe eines von einer Steuereinrichtung gesteuerten, einen Elektromotor umfassenden elektrischen Stellantriebs geschehen. Da zum Verstellen des Schließkörpers eine gewisse Kraft bzw. ein gewisses Drehmoment erforderlich ist, baut der Elektromotor relativ groß und schwer und verursacht zu seiner Herstellung nicht unerhebliche Kosten.

Es ist auch möglich, den Schließkörper mechanisch mit Hilfe eines pneumatisch beaufschlagten Stellantriebs zu verstellen. Damit bei Bedarf die pneumatische Energie vorhanden ist, wird für diese Verstelleinrichtung ein Unterdruckspeicherraum benötigt, und zum pneumatischen Verbinden des Stellantriebs mit dem Unterdruckspeicherraum bzw. zum Trennen dieser Verbindung wird eine Ventileinrichtung verwendet. Der Unterdruckspeicherraum und die Ventileinrichtung sind beispielsweise an der Karosserie befestigt. Zusätzlich benötigt man noch eine Unterdruckleitung vom Unterdruckspeicherraum zum Saugrohr, sowie eine Unterdruckleitung vom Stellantrieb zu der Ventileinrichtung und eine Unterdruckleitung von der Ventileinrichtung zum Unterdruckspeicherraum. Da im Bereich einer Brennkraftmaschine Schwingungen nie ganz zu vermeiden sind, müssen diese Unterdruckleitungen entsprechend elastisch sein. Das Einbauen der genannten Teile und das Verbinden dieser Teile mit den Unterdruckleitungen erfordert einen erheblichen Montageaufwand und führt nach längerer Betriebszeit nicht selten zu Funktionsausfällen.

Die Offenlegungsschrift DE 43 07 312 A1 zeigt eine Stellvorrichtung zur Veränderung der Ansaugrohrlänge bei Brennkraftmaschinen mit zwei parallelen Stellwellen, an denen Steuerklappen drehfest angebracht sind und die an aus dem Ansauggehäuse herausragenden Enden über je einen Anlenkhebel mit einer Kopplungsstange verbunden sind. Die Stellvorrichtung hat ein pneumatisches Stellglied mit einer Antriebsstange, eine Rückstellfeder, einen Druckspeicher mit Rückschlagventil und ein Steuerventil. Das Stellglied, der Druckspeicher und das Steuerventil sind zu einer Baueinheit zusammengefaßt, die als ganzes zum Ansauggehäuse ausgerichtet und mit dem Ansauggehäuse verbunden werden muß. Bei dieser Ausführung ist der Aufwand beim Anbau der Stellvorrichtung an das Ansauggehäuse der Brennkraftmaschine ziemlich hoch. Zunächst müssen die Stellwellen in das Ansauggehäuse eingebaut werden und dann muß, nach Anbau der das Stellglied, den Druckspeicher und das Steuerventil umfassenden Baueinheit an das Ansauggehäuse das Stellglied über Kopplungsstangen mit den Stellwellen verbunden werden. Weil im Bereich des Ansauggehäuses Maßtoleranzen nie vollständig vermeidbar sind, sind bei dieser Stellvorrichtung sehr aufwendige Einstell- und Justierarbeiten erforderlich.

Die Veröffentlichung der Europäischen Patentanmeldung EP 0 569 714 A1 zeigt eine Luftansaugvorrichtung für eine Brennkraftmaschine mit einem Saugverteiler. Bei diesem Saugverteiler ist ein Klappengehäuse, in dem sich eine Steuerklappe befindet, vorgesehen. Das Klappengehäuse ist unter Zwischenschaltung einer Gummimuffe an den Saugverteiler angebaut. Für das Klappengehäuse ist der Saugverteiler unterbrochen. Daraus ergibt sich der Nachteil, daß der Saugverteiler aus mehreren Einzelstücken besteht, die erst mit Einbau des Klappengehäuses zusammengefügt werden können. Auch der für die Verstellung der Steuerklappe sorgende Stellantrieb kann erst angebaut werden, wenn das Klappengehäuse mit dem Saugverteiler zusammengebaut wurde. Dies führt dazu, daß bei dieser Ausführung der Aufwand für den Zusammenbau sehr erheblich ist und am Saugverteiler Einstellarbeiten erforderlich sind. Zwischen dem Klappengehäuse und dem Saugverteiler muß über einen großen Umfang mit einer Gummimuffe abgedichtet werden, wobei zusätzlich das Ausbilden einer toleranzausgleichenden Quetschfalte notwendig erscheint.

### Vorteile der Erfindung

Die erfindungsgemäße Verstelleinrichtung für eine Brennkraftmaschine mit den kennzeichnenden Merkmalen des Anspruchs 1 hat demgegenüber den Vorteil, daß die Verstelleinrichtung technisch einfach herstellbar ist, funktionssicher arbeitet und daß die Montage der Verstelleinrichtung an die Brennkraftmaschine einen minimalen Aufwand erfordert.

Durch die in den abhängigen Ansprüchen aufgeführten Maßnahmen sind vorteilhafte Weiterbildungen und Verbesserungen der Verstelleinrichtung nach dem Anspruch 1 möglich.

Dadurch, daß die gesamte Baueinheit dort, wo der Schließkörper zum Einsatz kommen soll, d. h. dadurch, daß die Baueinheit direkt mit dem Gasgehäuse mechanisch verbunden ist, verringert sich die Anzahl der notwendigen Bauteile wesentlich, insbesondere benötigt man vorteilhafterweise nur einfache und auch zuverlässige Komponenten zur Übertragung der mechanischen Kräfte und zur Weiterleitung der pneumatischen Energie. Die auf einfache Weise erzielbare Robustheit der Vorrichtung hat einen vorteilhaften günstigen Einfluß auf die Dauerhaltbarkeit der Vorrichtung.

Der Schließkörperrahmen vereinfacht die Montage zusätzlich erheblich. Der Schließkörperrahmen macht die Vorrichtung auf vorteilhafte Weise kompakt und robust. Auch die Zuverlässigkeit und Dauer-Funktionsfähigkeit, insbesondere die Dichtheit zwischen der Vorrichtung und dem Saugrohr, werden auf vorteilhafte Weise beträchtlich verbessert.

Dadurch, daß der Schließkörperrahmen in eine Aufnahme am Gasgehäuse eingreift, wird die Montagemöglichkeit sehr vereinfacht, und man erhält eine einfache Möglichkeit zur Abdichtung.

Durch die gemeinsame Dichtung, womit die die Abdichtung zwischen den beiden Gasräumen und die Abdichtung zwischen dem Schließkörperrahmen und dem Schließkörper erfolgen kann, wird der Herstellungsaufwand deutlich reduziert.

Dadurch, daß beim Verbinden der Verstelleinrichtung mit dem Gasgehäuse eine an der Baueinheit vorgesehene Abdeckung den Gasraum verschließt, wird der Zusammenbau der Baueinheit mit dem Gasraum vorteilhafterweise besonders einfach und montagefreundlich.

Durch Gestalten des Gehäuses der Baueinheit in einer Weise, daß beim Zusammenstecken zweier Gehäuseteile Leitungsteile verbunden werden, ergibt sich eine besonders einfach herstellbare und funktionssichere Einrichtung.

Die erfindungsgemäße Verstelleinrichtung bietet den Vorteil, daß das Gehäuse der Verstelleinrichtung so ausgebildet werden kann, daß zum Verbinden der einzelnen Funktionsbereiche der Verstelleinrichtung keine separaten Schlauchleitungen erforderlich sind.

### Zeichnung

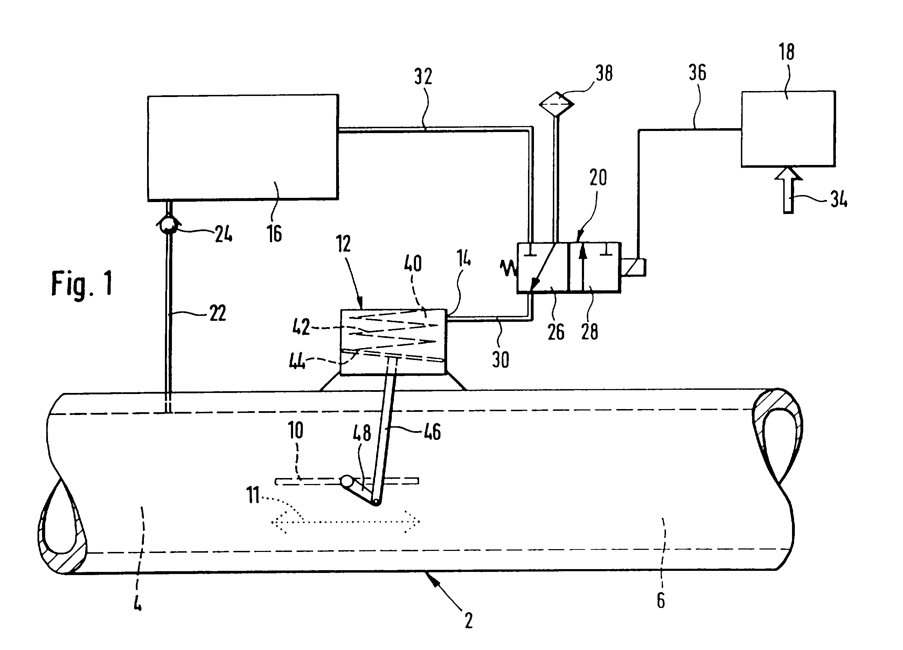

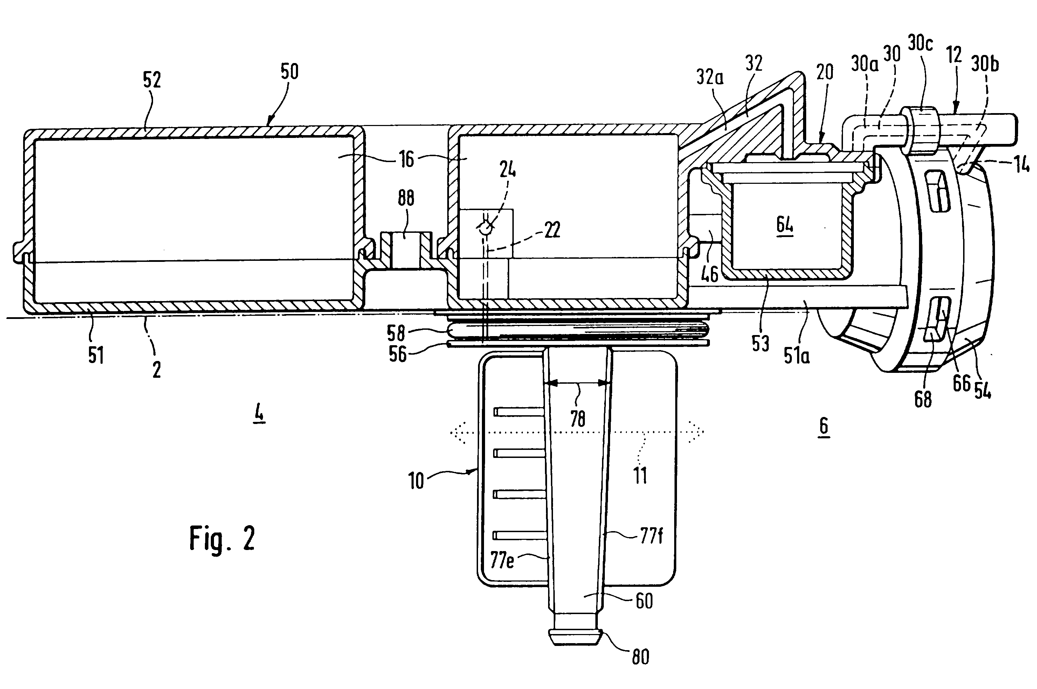

Ein ausgewähltes, besonders vorteilhaftes Ausführungsbeispiel der Erfindung ist in der Zeichnung vereinfacht dargestellt und in der nachfolgenden Beschreibung näher erläutert. Es zeigen die Figur 1 in beispielhafter Form symbolhaft den schaltungstechnischen Aufbau der Verstelleinrichtung und die Figuren 2 bis 5 verschiedene Ansichten einer beispielhaft ausgewählten vorteilhaften Ausführung der Verstelleinrichtung.

### Beschreibung des Ausführungsbeispiels

Die erfindungsgemäße Verstelleinrichtung kann bei verschiedenen Arten von Brennkraftmaschinen und an verschiedenen Stellen der Brennkraftmaschinen verwendet werden. Die Brennkraftmaschine ist beispielsweise ein Ottomotor mit Fremdzündung und mit einem Saugrohr. Mit der Verstelleinrichtung wird beispielsweise die Länge des Saugrohres zwischen zwei Längen umgeschaltet. Ist eine Verbindung innerhalb des Saugrohrs durch den Schließkörper verschlossen, so wird dadurch die wirksame Schwingsaugrohr-Länge beispielsweise verlängert. Durch die längere Luftsäule profitiert die Zylinderfüllung und damit das Drehmoment bei niedrigen Drehzahlen. Bei Drehzahlen über beispielsweise 3000 Umdrehungen je Minute werden die Rohrverzweigungen des Schwingsaugrohrs über den nun in Offenstellung stehenden Schließkörper miteinander verbunden. Jetzt ist nur die Schwingung im kurzen Schwingsaugrohr dynamisch wirksam, was die Leistung im oberen Drehzahlbereich verbessert.

Das Gasgehäuse ist in dem nachfolgend angenommenen Ausführungsbeispiel ein Saugrohr, und dementsprechend sind die zwei Gasräume beispielsweise Teile des Saugrohres.

Die Figur 1 zeigt einen beispielhaft ausgewählten, besonders vorteilhaften, in symbolhafter Form dargestellten schaltungstechnischen Aufbau der Verstelleinrichtung.

Die Figur 1 zeigt ein Gasgehäuse 2. Bei dem Gasgehäuse 2 handelt es sich beispielsweise um ein sogenanntes Saugrohr eines Ottomotors. Das Innere des Gasgehäuses 2 ist unterteilt in einen ersten Gasraum 4 und in einen zweiten Gasraum 6. Innerhalb des Gasgehäuses 2 befindet sich ein Schließkörper 10. Der Schließkörper 10 ist in einer Offenstellung dargestellt. In der Offenstellung besteht eine geöffnete Verbindung 11 zwischen den beiden Gasräumen 4 und 6. Die Verbindung 11 ist durch einen punktierten Doppelpfeil symbolhaft angedeutet. Durch Schwenken des Schließkörpers 10, um beispielsweise 90°, gelangt der Schließkörper 10 in eine Schließstellung. In der Schließstellung sind die beiden Gasräume 4, 6 voneinander getrennt, d. h. die Verbindung 11 ist geschlossen.

Ein Stellantrieb 12 dient zum mechanischen Verstellen des Schließkörpers 10. Der Stellantrieb 12 hat einen Luftanschluß 14 und ist pneumatisch ansteuerbar.

Daneben gibt es noch einen Unterdruckspeicherraum 16, eine Steuereinrichtung 18 und eine Ventileinrichtung 20.

Der Unterdruckspeicherraum 16 ist über eine Unterdruckleitung 22 beispielsweise mit dem ersten Gasraum 4 verbunden. Zwischen dem Gasraum 4 und dem Inneren des Unterdruckspeicherraums 16 gibt es ein Rückschlagventil 24. Das Rückschlagventil 24 ist so ausgebildet und angeordnet, daß bei einem Betriebszustand, bei dem der Druck im Gasraum 4 niedriger ist als der Druck im Unterdruckspeicherraum 16, Luft aus dem Unterdruckspeicherraum 16 durch die Unterdruckleitung 22 in den Gasraum 4 abgesaugt wird. Das Rückschlagventil 24 verhindert, daß bei einem Betriebszustand, bei dem der Druck im Gasraum 4 höher ist als der Druck im Unterdruckspeicherraum 16, durch die Unterdruckleitung 22 Luft in den Unterdruckspeicherraum 16 strömen kann.

Die Ventileinrichtung 20 ist umschaltbar in eine erste Schaltstellung 26 und in eine zweite Schaltstellung 28. Die Ventileinrichtung 20 ist über eine Unterdruckleitung 30 mit dem Luftanschluß 14 des Stellantriebs 12 verbunden. Eine Unterdruckleitung 32 führt von der Ventileinrichtung 20 zum Unterdruckspeicherraum 16.

Die Steuereinrichtung 18 wird über Eingabesignale 34 über den Betriebszustand der Brennkraftmaschine informiert. Die Eingabesignale 34 sind durch einen Pfeil symbolhaft dargestellt. Abhängig von den Eingabesignalen 34 und einem der Steuereinrichtung 18 eingegebenen Programm liefert die Steuereinrichtung 18 über eine elektrische Leitung 36 Steuersignale an die Ventileinrichtung 20.

Abhängig von den Steuersignalen der Steuereinrichtung 18 schaltet die Ventileinrichtung 20 in die erste Schaltstellung 26 oder in die zweite Schaltstellung 28.

Der Stellantrieb 12 umfaßt einen Arbeitsraum 40, eine Feder 42, eine Trennwand 44 und eine Stellstange 46. Ein Schwenkhebel 48 ist drehfest mit dem Schließkörper 10 verbunden. Die Trennwand 44 ist beispielsweise ein in dem Stellantrieb 12 abgedichtet verschiebbar gelagerter Kolben oder eine mit Hilfe einer Membrane den Arbeitsraum 40 abschließende Platte, mit der die Stellstange 46 fest verbunden ist.

In der ersten Schaltstellung 26 der Ventileinrichtung 20 ist der Arbeitsraum 40 des Stellantriebs 12 über einen Filter 38 mit der umgebenden Atmosphäre verbunden. In der ersten Schaltstellung 26 stellt die Feder 42 über die Stellstange 46 und über den Schwenkhebel 48 den Schließkörper 10 in die in der Figur 1 dargestellte Offenstellung.

Durch Umschalten der Ventileinrichtung 20 in die zweite Schaltstellung 28 ist der Arbeitsraum 40 mit dem Unterdruckspeicherraum 16 verbunden, und es wird aus dem Arbeitsraum 40 Luft in den Unterdruckspeicherraum 16 abgesaugt, so daß in dem Arbeitsraum 40 ein Unterdruck entsteht. Dadurch wird entgegen der Kraft der Feder 42 über die Stellstange 46 und über den Schwenkhebel 48 der Schließkörper 10 in seine Schließstellung verstellt.

Wenn man die in der Figur 1 dargestellten unterschiedlichen Komponenten der Verstelleinrichtung separat anordnen würde, wenn man beispielsweise den Unterdruckspeicherraum 16 und die Ventileinrichtung 20 abseits von dem Gasgehäuse 2, beispielsweise an der Karosserie befestigen würde und man würde diese Komponenten entsprechend dem in der Figur 1 dargestellten Schaltplan über beispielsweise Kunststoffschlauchrohre miteinander verbinden, dann könnte man zwar ebenfalls die anhand der Figur 1 beschriebene Funktionsweise erreichen, aber der Montageaufwand im Fahrzeug wäre sehr erheblich. Auch die Gefahr eventueller Undichtheiten an den verschiedenen Verbindungsstellen wäre relativ groß.

Deshalb wird vorgeschlagen, einige der in der Figur 1 dargestellten Komponenten zu einer geschickten Baueinheit zusammenzufassen. Die Figuren 2 bis 5 zeigen in beispielhafter Form ein Ausführungsbeispiel, wie auf geschickte Weise die verschiedenen Komponenten zu einer vorteilhaften Baueinheit zusammengefaßt werden können.

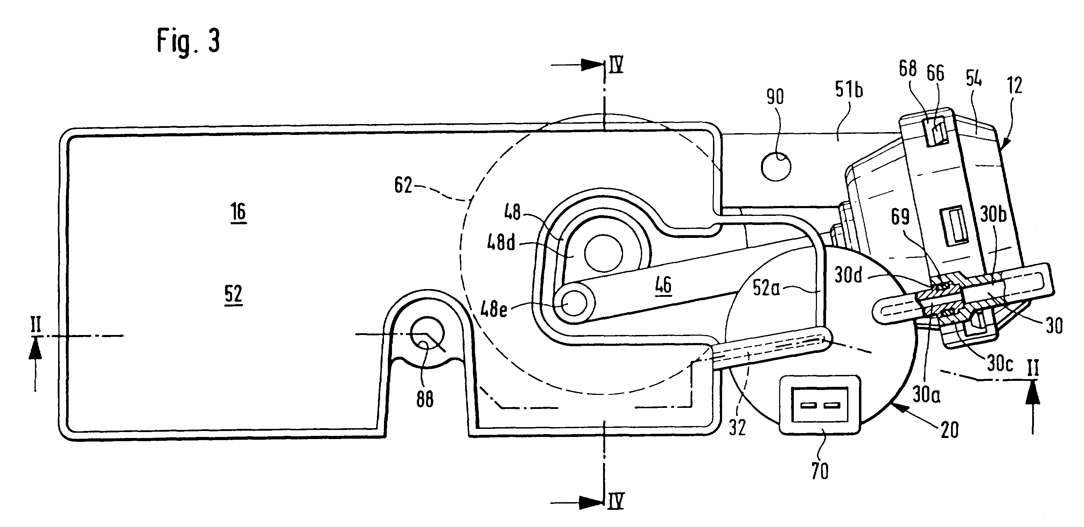

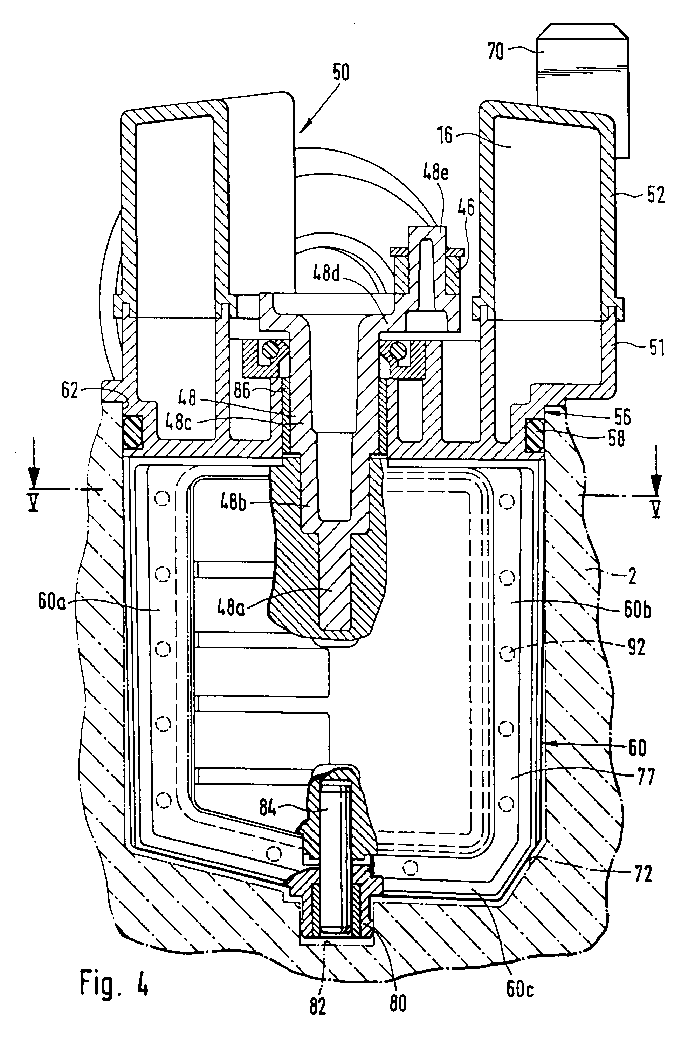

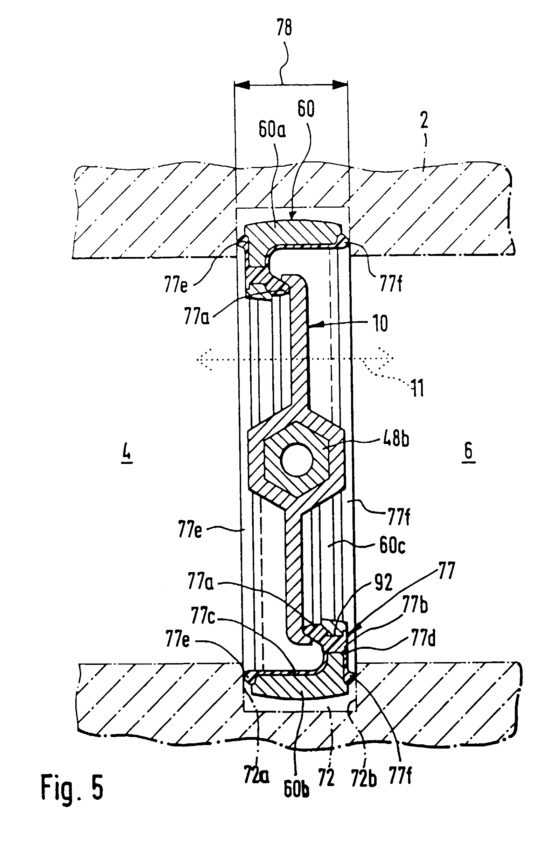

Die Figur 2 zeigt einen Längsschnitt durch die Verstelleinrichtung entlang einer in der Figur 3 dargestellten Linie II-II. In der Figur 3 ist eine Draufsicht auf die Verstelleinrichtung gezeigt. Die Figur 4 zeigt einen Schnitt entlang der Linie IV-IV (Fig. 3). In der Figur 5 ist ein Schnitt entlang der Linie V-V (Fig. 4) gezeigt. In der Figur 3 ist wegen der besseren Übersichtlichkeit das Gasgehäuse 2 nicht gezeigt; in der Figur 2 ist aus demselben Grund das Gasgehäuse 2 nur durch eine strichpunktierte Linie angedeutet; und in den Figuren 4 und 5 ist zwecks besserer Unterscheidung das Gasgehäuse 2 nur teilweise und mit strichpunktierten Linien dargestellt. Die Steuereinrichtung 18 (Fig. 1) ist ebenfalls wegen besserer Übersichtlichkeit in den Figuren 2 bis 5 nicht dargestellt.

In allen Figuren sind gleiche oder gleichwirkende Teile mit denselben Bezugszeichen versehen.

Die Verstelleinrichtung hat ein Gehäuse 50. Das Gehäuse 50 umfaßt ein Gehäuseteil 51 (Fig. 2), ein Gehäuseteil 52, ein Gehäuseteil 53 und ein Gehäuseteil 54. An das Gehäuseteil 51 ist eine Abdeckung 56 angeformt (Fig. 2, 4). Die Abdeckung 56 besitzt eine umlaufende Nut, in die ein Dichtring 58, vorzugsweise ein O-Ring, eingelegt ist (Fig. 2, 4). An die Abdeckung 56 angeformt bzw. mit der Abdeckung 56 fest verbunden ist ein Schließkörperrahmen 60 (Fig. 2, 4, 5). An einer Außenwand des Gasgehäuses 2 ist eine Öffnung 62 (Fig. 3, 4) vorgesehen. Die Öffnung 62 und die Abdeckung 56 sind so aufeinander abgestimmt, daß, wenn die Verstelleinrichtung an das Gasgehäuse 2 montiert ist, die Abdeckung 56 die Öffnung 62 vollständig verschließt, und zusätzlich wird durch den Dichtring 58 das Gasgehäuse 2 abgedichtet.

Die Öffnung 62 ist so groß dimensioniert, daß der Schließkörperrahmen 60 durch die Öffnung 62 in das Innere des Gasgehäuses 2 auf einfache Weise hineinmontiert werden kann.

Die Gehäuseteile 51, 52 können beispielsweise durch Schweißen oder Kleben miteinander verbunden werden. Die Gehäuseteile 51, 52 sind so gestaltet, daß zwischen ihnen der Unterdruckspeicherraum 16 gebildet wird (Fig. 2, 4). Auch das Gehäuseteil 53 kann mit dem Gehäuseteil 52 beispielsweise verschweißt, verklebt oder verklipst werden. Die Gehäuseteile 52, 53 sind so gestaltet, daß sich zwischen diesen beiden Teilen ein Ventilraum 64 (Fig. 2) zur Aufnahme der Ventileinrichtung 20 (Fig. 1) bildet. Der Ventilraum 64 ist so dimensioniert, daß darin die Ventileinrichtung 20 (Fig. 1) untergebracht werden kann. Der besseren Übersichtlichkeit wegen ist in der Figur 2 die Ventileinrichtung 20 nicht dargestellt, sondern die Figur 2 zeigt den Ventilraum 64 bei herausgenommener Ventileinrichtung 20. Bei der Ventileinrichtung 20 handelt es sich beispielsweise um ein dem Fachmann bekanntes 3/2-Ventil (d. h. drei Anschlüsse und zwei Schaltstellungen), weshalb in der Figur 2 mit Rücksicht auf eine gute Übersichtlichkeit auf eine ausführliche Darstellung der Ventileinrichtung 20 verzichtet wurde.

Durch das Gehäuseteil 52 verläuft ein Kanal 32a. Der Kanal 32a führt vom Unterdruckspeicherraum 16 zum Ventilraum 64. Dieser Kanal 32a (Fig. 2) bildet bei in den Ventilraum 64 eingebauter Ventileinrichtung 20 (Fig. 1) die Unterdruckleitung 32. In das Gehäuseteil 52 ist noch ein weiterer Kanal 30a (Fig. 2, 3) eingeformt.

Das Gehäuseteil 51 ist mit dem Gehäuseteil 54 so abgestimmt, daß die Gehäuseteile 51, 54 als Bestandteil des Stellantriebs 12 betrachtet werden können. Beispielsweise am Gehäuseteil 54 sind Rastzungen 66 vorgesehen, die im montierten Zustand in am Gehäuseteil 51 vorgesehene Aussparungen 68 einrasten können (Fig. 2, 3), so daß im montierten Zustand das Gehäuseteil 54 fest mit dem Gehäuseteil 51 verbunden ist. Die Rastzungen 66 können auch am Gehäuseteil 51 und die Aussparungen 68 am Gehäuseteil 54 vorgesehen sein. Auch ein Verkleben der beiden Gehäuseteile 51, 54 ist möglich. Zwischen den Gehäuseteilen 51, 54 (Fig. 2, 3) bildet sich der Arbeitsraum 40 (Fig. 1), in dem auch die Feder 42 und die Trennwand 44 aufgenommen werden können und aus dem die Stellstange 46 (Fig. 1, 3) herausragt.

Es gibt am Gehäuseteil 51 einen Steg 51a (Fig. 2) und einen Steg 51b (Fig. 3). Die Stege 51a, 51b sind bei dem dargestellten Ausführungsbeispiel vorgesehen, damit das Gehäuseteil 51, das zum Teil den Unterdruckspeicherraum 16 und zum Teil den Stellantieb 12 umschließt, mit einer einzigen Gießform als zusammenhängendes Teil gefertigt werden kann und im Betriebszustand ausreichend stabil ist.

Im Gehäuseteil 54 ist ein Kanal 30b (Fig. 2, 3) vorgesehen. Am Ende des Kanals 30b endet das Gehäuseteil 54 in der Weise, daß es dort ein Überwurfstück 30c bildet (Fig. 2, 3). Der in das Gehäuseteil 52 eingeformte Kanal 30a endet so, daß sich an seinem Ende ein Steckstück 30d bildet (Fig. 3). Das Steckstück 30d und das Überwurfstück 30c sind so ausgebildet, daß beim Aufklipsen des Gehäuseteils 54 auf das Gehäuseteil 52 das Überwurfstück 30c über das Steckstück 30d greift, so daß die Unterdruckleitung 30 durch die Kanäle 30a, 30b verlaufen kann. Durch diese Art der Ausbildung der Gehäuseteile 52, 54 sind die Ventileinrichtung 20 und der Stellantieb 12 mechanisch und pneumatisch miteinander verbunden, ohne daß dazu irgendwelche Schlauchverbindungen installiert werden müßten. Zwischen dem Steckstück 30d und dem Überwurfstück 30c kann eine Dichtung 69 (Fig. 3) vorgesehen sein. Bei einer nicht dargestellten äquivalenten Ausführung sind das Überwurfstück 30c an das Gehäuseteil 52 und das Steckstück 30d an das Gehäuseteil 54 angeformt.

Das Gehäuseteil 52 ist im Bereich der Ventileinrichtung 20 so geformt, daß man dort eine Steckverbindung 70 erhält (Fig. 3, 4). An der Steckverbindung 70 kann die elektrische Leitung 36 (Fig. 1) angeschlossen werden. Die elektrische Leitung 36 ist in den Figuren 3 und 4 der besseren Übersichtlichkeit wegen nicht dargestellt.

Mit Blick auf die Figur 4 kann der Schließkörperrahmen 60 gedanklich in ein seitliches linkes Rahmenteil 60a, in ein seitliches rechtes Rahmenteil 60b und in ein unteres Rahmenteil 60c aufgeteilt werden (Fig. 4). Im Bereich des Schließkörperrahmens 60 gibt es an der Innenseite des Gasgehäuses 2 eine Aussparung 72. (Fig. 4, 5) Die Aussparung 72 ist so tief und so breit, daß die Rahmenteile 60a, 60b, 60c des Schließkörperrahmens 60 gerade in die Aussparung 72 passen. Die Aussparung 72 hat eine stirnseitige Seitenfläche 72a und eine stirnseitige Seitenfläche 72b (Fig. 5).

Am Schließkörperrahmen 60 befindet sich eine aus Dichtungsmaterial bestehende Dichtung 77 (Fig. 4, 5). Die Dichtung 77 ist beispielsweise an die Rahmenteile 60a, 60b, 60c des Schließkörperrahmens 60 angegossen. Die Dichtung 77 ist so geformt, daß bei am Gasgehäuse 2 anmontierter Verstelleinrichtung die Dichtung 77 zwischen dem Schließkörperrahmen 60 und der Seitenfläche 72a als auch zwischen dem Schließkörperrahmen 60 und der Seitenfläche 72b und zusätzlich auch zwischen dem Schließkörperrahmen 60 und dem Schließkörper 10 abdichten kann.

Der Schließkörperrahmen 60 besitzt in Längsrichtung, d. h. in Richtung der Verbindung 11 (punktierter Doppelpfeil) zwischen den beiden Gasräumen 4, 6, eine Rahmenbreite 78 (Fig. 2, 5). Die Rahmenbreite 78 des Schließkörperrahmens 60 ist nicht über die gesamte Länge der Rahmenteile 60a, 60b konstant. Mit zunehmendem Abstand der Rahmenbreite 78 von der Öffnung 62 (Fig. 4), nimmt die Rahmenbreite 78 ab. Entsprechend dem Kleinerwerden der Rahmenbreite 78 des Schließkörperrahmens 60 (Fig. 2) nimmt auch der Abstand zwischen den beiden Seitenflächen 72a, 72b der Aussparung 72 ab, je weiter die entsprechende Stelle von der Öffnung 62 (Fig. 4) entfernt ist. Die Rahmenbreite 78 und der Abstand der beiden Seitenflächen 72a, 72b sind so aufeinander abgestimmt, daß zunächst der Schließkörperrahmen 60 durch die Öffnung 62 in das Innere des Gasgehäuses 2 hineingeschoben werden kann, und während der Montage paßt der Schließkörperrahmen 60 zunächst in die Aussparung 72 (Fig. 5), ohne daß die an den Schließkörperrahmen 60 angeformte Dichtung 77 die Seitenflächen 72a, 72b berührt (von zufälliger Berührung abgesehen). Erst kurz bevor die zu montierende Verstelleinrichtung die endgültige Position erreicht, taucht die Abdeckung 56 (Fig. 2, 4) in die Öffnung 62 (Fig. 4) ein, und ungefähr erst dann kommen der Dichtring 58 an der Öffnung 62 und die Dichtung 77 an den Seitenflächen 72a, 72b der Aussparung 72 zur Anlage. Dadurch ergibt sich, daß die Verstelleinrichtung einfach und ohne größere Reibung montierbar ist und daß zuverlässige Dichtheit erreichbar ist. Dadurch, daß zwischen dem Gasgehäuse 2 und den entsprechenden Dichtungen 58 und 77 größere Reibung nicht auftritt, werden die Dichtungen 58, 77 während der Montage der Verstelleinrichtung an das Gasgehäuse 2 deutlich geschont.

Am unteren Rahmenteil 60c gibt es einen zylinderartigen Fortsatz 80. Der Fortsatz 80 ragt in eine im Gasgehäuse 2 vorgesehene zylindrische Vertiefung 82 (Fig. 4). Der Fortsatz 80 paßt mit leichter Pressung in die Vertiefung 82. Der Fortsatz 80 befindet sich am Schließkörperrahmen 60 koaxial zur Abdeckung 56. Durch die Abdeckung 56 und durch den Fortsatz 80, die beide im Gasgehäuse 2 gelagert sind, wird erreicht, daß der Schließkörperrahmen 60 sicher und ohne Gefahr von Durchbiegungen und eventuellem Brechen in dem Gasgehäuse 2 gelagert ist.

Innerhalb des Schließkörperrahmens 60 ist der Schließkörper 10 um ungefähr 90° schwenkbar gelagert.

Auf der dem unteren Rahmenteil 60c zugewandten Seite ist der Schließkörper 10 mit Hilfe eines Lagerstiftes 84 (Fig. 4) schwenkbar gelagert. Der Lagerstift 84 erstreckt sich teilweise in den Schließkörper 10 und teilweise in den Fortsatz 80 des Schließkörperrahmens 60. Auf der anderen Seite der Schwenkachse des Schließkörpers 10 ist der Schließkörper 10 mit Hilfe des Schwenkhebels 48 gelagert (Fig. 4). Der Schwenkhebel 48 unterteilt sich in ein zylindrisches Segment 48a (Fig. 4), ein unrundes Segment 48b (Fig. 4, 5), ein Lagersegment 48c (Fig. 4), ein radiales Segment 48d (Fig. 3, 4) und in ein zylindrisches Dornsegment 48e. Das Dornsegment 48e ist in einer am dem Stellantrieb 12 abgewandten Ende der Stellstange 46 vorgesehenen zylindrischen Aussparung schwenkbar gelagert. Die Stellstange 46 greift am Dornsegment 48e (Fig. 3, 4) an.

Das Lagersegment 48c ist über eine Lagerbuchse 86 im Gehäuseteil 51 geführt und schwenkbar gelagert. Das zylindrische Segment 48a des Schwenkhebels 48 sorgt für eine exakte Ausrichtung und Führung des Schließkörpers 10 mit Hilfe des Schwenkhebels 48. Das unrunde Segment 48b ist beispielsweise sechseckig, wie die Figur 5 zeigt. Das unrunde Segment 48b kann aber auch jede andere von rund abweichende Form besitzen. Mit dem unrunden Segment 48b wird erreicht, daß der Schließkörper 10 in Schwenkrichtung exakt gegenüber dem Schwenkhebel 48 ausgerichtet ist und sich nicht gegenüber dem Schwenkhebel 48 verdrehen kann. Eine Hin- und Herbewegung der durch den Stellantieb 12 angetriebenen Stellstange 46 führt zu einer Schwenkbewegung des Schließkörpers 10.

An das Gehäuseteil 51 des Gehäuses 50 ist eine Lasche angeformt. In dieser Lasche befindet sich ein Befestigungsloch 88 (Fig. 2, 3). Zusätzlich ist im Steg 51b des Gehäuseteils 51 des Gehäuses 50 ein weiteres Befestigungsloch 90 vorgesehen (Fig. 3). Die Befestigungslöcher 88, 90 dienen dazu, daß die Verstelleinrichtung auf einfache Weise mit Hilfe zweier Schrauben am Gasgehäuse 2 festgeschraubt werden kann. Diese Befestigungsschrauben sind der besseren Übersichtlichkeit wegen in der Zeichnung nicht dargestellt.

Durch einen an das Gehäuseteil 52 angeformten Steg 52a (Fig. 3), der den Bereich um den Unterdruckspeicherraum 16 des Gehäuseteils 52 mit dem Bereich um die Ventileinrichtung 20 verbindet, sorgt für eine wesentliche Versteifung des Gehäuses 50 und für eine bessere Formbarkeit des Gehäuseteils 52.

Die Dichtung 77 hat im wesentlichen sechs Dichtungsbereiche 77a, 77b, 77c, 77d, 77e, 77f (Fig. 5). Der Dichtungsbereich 77a dient zur Abdichtung zwischen dem Schließkörperrahmen 60 und dem Schließkörper 10. Der Dichtungsbereich 77e dichtet zwischen dem Schließkörperrahmen 60 und der Seitenfläche 72a des Gasgehäuses 2, und der Dichtungsbereich 77f sorgt für eine Abdichtung zwischen dem Schließkörperrahmen 60 und der Seitenfläche 72b des Gasgehäuses 2. Es kann ggf. auch auf einen der beiden Dichtungsbereiche 77e bzw. 77f verzichtet werden.

Im Schließkörperrahmen 60 gibt es eine Aussparung 92 bzw. mehrere Aussparungen 92 (Fig. 4, 5). Der durch die Aussparung 92 bzw. die Aussparungen 92 verlaufende Dichtungsbereich 77b und die Dichtungsbereiche 77c und 77d sorgen dafür, daß die gesamte Dichtung 77, obwohl die Dichtung 77 mehrere Dichtfunktionen ausübt, aus einem einzigen Stück gefertigt werden kann. Die Dichtung 77 kann mit einer einzigen Form an den Schließkörperrahmen 60 angespritzt werden, da sämtliche Dichtungsbereiche 77a - 77f miteinander verbunden sind.

Der Dichtungsbereich 77f verläuft auf der der Seitenfläche 72b zugewandten Seite des Schließkörperrahmens 60 ohne Unterbrechung stirnseitig über die Rahmenteile 60a, 60b, 60c, so daß eine gute Abdichtung erreicht wird. Ebenso verläuft der Dichtungsbereich 77e auf der gegenüberliegenden Stirnseite der Rahmenteile 60a, 60b, 60c ohne Unterbrechung. Der Dichtungsbereich 77a, an dem der Schließkörper 10 in der Schließstellung zur Anlage kommt, verläuft stirnseitig, ausgehend vom oberen Ende des Rahmenteils 60a, entlang des Rahmenteils 60a und entlang des sich daran anschließenden Bereichs des unteren Rahmenteils 60c. Im Bereich der Schwenkachse des Schließkörpers 10 wechselt der Dichtungsbereich 77a am unteren Rahmenteil 60c auf die andere Stirnseite des unteren Rahmenteils 60c, von wo aus der Dichtungsbereich 77a wiederum bis zum oberen Ende des Rahmenteils 60b verläuft. Der Dichtungsbereich 77a der Dichtung 77 ist an den Rahmenteilen 60a, 60b, 60c so angeformt, daß in der Schließstellung der Schließkörper 10 am Dichtungsbereich 77a zur Anlage kommt, aber auch so, daß eine Schwenkung des Schließkörpers 10 in die Offenstellung durch die Dichtung 77 nicht behindert wird.

Die Gehäuseteile 51, 52, 53, 54, die Stellstange 46, der Schwenkhebel 48, der Schließkörperrahmen 60 und der Schließkörper 10 bestehen vorzugsweise aus gespritztem Kunststoff. Das Gehäuseteil 51 und der Schließkörperrahmen 60 werden vorzugsweise einstückig zusammenhängend in einer einzigen Spritzgußform gefertigt. Nach dem Zusammenfügen der Gehäuseteile 51, 52, 53, 54 bildet die Verstelleinrichtung eine leicht handhabbare, zusammenhängende, kompakte und robuste Baueinheit.

Es sei noch darauf hingewiesen, daß auch mehrere Schließkörper vorgesehen sein können, mit denen weitere Gasräume zu- bzw. abschaltbar sind.

## Patentansprüche

1. Verstelleinrichtung für eine Brennkraftmaschine mit einem Gasgehäuse mit zwei Gasräumen und mit einer Verbindung (11) zwischen den beiden Gasräumen, mit einem Schließkörper (10) zum Öffnen und Schließen der Verbindung, mit einem Unterdruckspeicherraum (16) und mit einem pneumatisch durch einen in dem Unterdruckspeicherraum (16) herrschenden Unterdruck betätigbaren Stellantrieb zum mechanischen Verstellen des Schließkörpers,' ferner mit einer Ventileinrichtung (20), die von einer Steuereinrichtung Steuersignale erhält, wobei die Ventileinrichtung (20) in Abhängigkeit von den Steuersignalen den Stellantrieb mit dem in dem Unterdruckspeicherraum (16) herrschenden Unterdruck verbindet, wobei der Schließkörper (10), der Unterdruckspeicherraum (16), die Ventileinrichtung (20) und der Stellantrieb (12) zu einer Baueinheit zusammengefaßt sind, an der Baueinheit ein Schließkörperrahmen (60) vorgesehen ist, durch den die Verbindung (11) verläuft und an dem Schließkörperrahmen (60) eine Dichtung (77) vorgesehen ist, die zur Abdichtung zwischen dem Schließkörperrahmen (60) und dem Gasgehäuse (2), sowie zwischen dem Schließkörperrahmen (60) und dem Schließkörper (10) dient.

2. Verstelleinrichtung nach Anspruch 1, dadurch gekennzeichnet, daß die Baueinheit mit dem Gasgehäuse (2) mechanisch verbunden ist.

3. Verstelleinrichtung nach Anspruch 1 oder 2, dadurch gekennzeichnet, daß der Schließkörper (10) in einer Schließstellung an dem Schließkörperrahmen (60) zur Anlage kommt.

4. Verstelleinrichtung nach Anspruch 1, 2 oder 3, dadurch gekennzeichnet, daß am Gasgehäuse (2) im Bereich der Verbindung (11) eine Aussparung (72, 72a, 72b) vorgesehen ist, in die der Schließkörperrahmen (60) eingreift.

5. Verstelleinrichtung nach einem der vorhergehenden Ansprüche, dadurch gekennzeichnet, daß an der Baueinheit eine das Gasgehäuse (2) abschließende Abdeckung (56) vorgesehen ist.

6. Verstelleinrichtung nach einem der vorhergehenden Ansprüche, dadurch gekennzeichnet, daß die Baueinheit ein aus mindestens zwei Gehäuseteilen (52, 54) bestehendes Gehäuse (50) umfaßt, wobei die beiden Gehäuseteile (52, 54) so ausgebildet sind, daß beim Zusammenbau der beiden Gehäuseteile (52, 54) neben einem Innenraum zwischen den beiden Gehäuseteile (52, 54) auch eine Strömungsverbindung (30) entsteht.

7. Verstelleinrichtung nach einem der vorhergehenden Ansprüche, dadurch gekennzeichnet, daß die Baueinheit eine Abdeckung (56) umfaßt und an dem Gasgehäuse (2) eine Öffnung (62) vorgesehen ist, durch die der Schließkörperrahmen (60) in das Gasgehäuse (2) eingeführt ist, so daß bei vollständigem Einführen des Schließkörperrahmens (60) in das Gasgehäuse (2) die Abdeckung (56) die Öffnung (62) verschließt.

## Claims

1. Adjusting device for an internal combustion engine having a gas housing with two gas spaces and having a connection (11) between the two gas spaces, having a closing element (10) for opening and closing the connection, having a partial vacuum storage space (16) and having an actuator drive, which can be activated pneumatically by a partial vacuum prevailing in the partial vacuum storage space (16), for mechanically adjusting the closing element, also having a valve device (20) which receives control signals from a control device, the valve device (20) connecting, as a function of the control signals, the actuator drive to the partial vacuum prevailing in the partial vacuum storage space (16), the closing element (10), the partial vacuum storage space (16), the valve device (20) and the actuator drive (12) being combined to form one physical unit, a closing element frame (60) being provided on the physical unit, the connection (11) running through said closing element frame (60) and a seal (77) which serves to provide a seal between the closing element frame (60) and the gas housing (2), as well as between the closing element frame (60) and the closing element (10), being provided on said closing element frame (60).

2. Adjusting device according to Claim 1, characterized in that the physical unit is mechanically connected to the gas housing (2).

3. Adjusting device according to Claim 1 or 2, characterized in that the closing element (10) comes to bear against the closing element frame (60) in a closed position.

4. Adjusting device according to Claim 1, 2 or 3, characterized in that a recess (72, 72a, 72b), into which the closing element frame (60) engages, is provided on the gas housing (2) in the vicinity of the connection (11).

5. Adjusting device according to one of the preceding claims, characterized in that a cover (56) which closes off the gas housing (2) is provided on the physical unit.

6. Adjusting device according to one of the preceding claims, characterized in that the physical unit comprises a housing (50) which is composed of at least two housing components (52, 54), the two housing components (52, 54) being embodied in such a way that when the two housing components (52, 54) are assembled not only an intermediate space between the two housing components (52, 54) but also a flow connection (30) is produced.

7. Adjusting device according to one of the preceding claims, characterized in that the physical unit comprises a cover (56) and an opening (62), through which the closing element frame (60) is introduced into the gas housing (2), is provided on the gas housing (2) with the result that when the closing element frame (60) is completely introduced into the gas housing (2) the cover (56) closes the opening (62).

## Revendications

1. Installation de réglage de moteur à combustion interne comprenant un boîtier à gaz à deux chambres à gaz et une liaison (11) entre les deux chambres à gaz,
- un organe d'obturation (10) pour ouvrir et fermer la liaison,
- un réservoir à dépression (16) et
- un actionneur pneumatique mis en oeuvre par la dépression régnant dans le réservoir à dépression (16) pour régler mécaniquement l'organe d'obturation ainsi qu'un distributeur recevant les signaux de commande d'une installation de commande,
- le distributeur (20) reliant en fonction des signaux de commande, l'actionneur à la dépression régnant dans le réservoir à dépression (16),
- l'organe d'obturation (10), le réservoir à dépression (16), le distributeur (20) et l'actionneur (12) étant réunis sous la forme d'une unité et un châssis d'organe d'obturation (60) est prévu sur cette unité à travers lequel passe la liaison (11) et un joint (77) est prévu sur le châssis (60) de l'organe d'obturation, servant à réaliser l'étanchéité entre le châssis (60) et le boîtier à gaz (2) et entre le châssis (60) et l'organe d'obturation (10) .

2. Installation de réglage selon la revendication 1,
caractérisée en ce que
l'unité est reliée mécaniquement au boîtier à gaz (2).

3. Installation de réglage selon les revendications 1 ou 2,
caractérisée en ce que
l'organe d'obturation (10) vient en appui contre le châssis (60) lorsqu'il est en position de fermeture.

4. Installation de réglage selon l'une quelconque des revendications 1, 2, 3,
caractérisée en ce qu'
une découpe (72, 72a, 72b) est prévue sur le boîtier à gaz (2) au niveau de la liaison (11), le châssis (60) de l'organe d'obturation venant prendre dans cette découpe.

5. Installation de réglage selon l'une quelconque des revendications précédentes,
caractérisée par
un couvercle (56) fermant le boîtier à gaz (2) prévu sur l'unité.

6. Installation de réglage selon l'une quelconque des revendications précédentes,
caractérisée en ce que
l'unité comprend un boîtier (60) formé d'au moins deux parties de boîtier (52, 54), les deux parties de boîtier (52, 54) étant réalisées pour qu'au montage de ces deux parties de boîtier (52, 54), il se forme en plus d'un volume intérieur entre les deux parties de boîtier (52, 54) également une communication (30).

7. Installation de réglage selon l'une quelconque des revendications précédentes,
caractérisée en ce que
l'unité comprend un couvercle (56) et une ouverture (62) est prévue dans le boîtier à gaz (2) à travers laquelle on introduit le châssis (60) de l'organe d'obturation dans le boîtier à gaz (2) pour que lorsque le châssis (60) est complètement introduit dans le boîtier à gaz (2), le couvercle (56) ferme l'ouverture (62).
